# EUROPEAN PATENT APPLICATION

(11) **EP 0 611 128 A1**
(43) Date of publication of application: **17.08.1994**
(21) Application number: 94300899.5
(22) Date of filing: 08.02.1994
(51) Int. Cl.: G21C 3/344, G21C 3/322

(54) **Spacer to suppress departure from nucleate boiling**

(30) Priority: 08.02.1993 US 14608
(71) Applicant: GENERAL ELECTRIC COMPANY, Schenectady, NY 12345 (US)
(72) Inventor: Matzner, Bruce, San Jose, California 95124 (US)
(74) Representative: Lupton, Frederick

(57) **Abstract**

In a nuclear fuel bundle for a boiling water nuclear reactor having ferrule spacers, the ferrule spacer closest to the lower tie plate is provided with large apertures. These large apertures constitute the removal of almost all of the material of the ferrule spacer from around the fuel rods consistent with structural requirements. In this lowest ferrule spacer location, it has been found that these apertures within the individual ferrules suppress the tendency of the fuel rods downstream of the first spacer to be subject to departure from nucleate boiling.

## Description

This invention relates to fuel bundles in boiling water nuclear reactors and more particularly to ferrule spacers utilized with such fuel bundles. In this disclosure, the bottom ferrule spacer of the fuel bundle is modified with relatively large openings to suppress the possibility of departure from nucleate boiling.

### BACKGROUND OF THE INVENTION

In boiling water nuclear reactors, fuel bundles are utilized. These fuel bundles include a plurality of spaced apart vertically upstanding fuel rods, these fuel rods being supported on a lower tie plate and extending upwardly to or toward and an upper tie plate. The fuel rods are surrounded by a fuel channel which extends from the vicinity of the lower tie plate to the vicinity of the upper tie plate. The fuel bundle channel confines the flow of water within the fuel bundle around and about the steam generating fuel rods. The lower tie plate allows moderating water coolant to enter the fuel bundle; the upper tie plate allows water and generated steam to exit the fuel bundle.

Both the nuclear design and the operating dynamics of a boiling water reactor fuel bundle require that the fuel rods be braced in parallel side by side relation at their designed spacial separation. This prevents abrading contact of the fuel rods and maintains the fuel rods in designed separation for maximum nuclear efficiency.

In virtually all spacers, each fuel rod at each spacer is individually surrounded and held in place. Typically, seven spacers at evenly spaced vertical intervals are used along the length of the fuel rods within a fuel bundle. As the fuel rods extending between the tie plates are in the order of 160 inches in length, the spacers are usually placed at 20 inch intervals along the vertical length of the fuel rods.

It is now known that a particular advantageous type of fuel bundle spacer utilized is a so-called "ferrule spacer." Ferrule spacers can be constructed from an alloy of zirconium known as Zircalloy. This material is particularly advantageous as it has a low neutron absorption cross section which avoids the parasitic absorption of neutrons within the fuel bundle.

Ferrule spacers comprise relatively short -- on the order of 1 inch high -- spacers with discrete ferrules (or cylinders) surrounding each fuel rod at the elevation of the spacer. Typically, each ferrule of a ferrule spacer defines four internal stops against which a fuel rod interior of the spacer is biased. A spring -- typically of the loop variety -- extends into the spacer generally opposite two pairs of stops and biases the fuel rod at the ferrule into the stops. Thus through the combination of both the stops and the spring, fuel rods interior of the ferrule spacers are effectively centered with respect to the ferrule.

Ferrule spacers have been found to be particularly advantageous in the upper, two phase region of the fuel bundle. Specifically, in the upper, two phase region of the fuel bundle, especially in the vicinity of the second, third and even fourth spacer from the top of the fuel bundle, a two phase flow of water and steam occurs when the reactor is in steam generation operation. This two phase flow region is a zone in the fuel bundle where the flow of generated steam predominates with respect to the water entrained with the steam. For purposes of this patent application, this region will be called the annular flow regime as is used in the technical literature.

For the generation of steam, the water within the annular flow regime coats the fuel rods with a liquid film layer. This liquid film layer is vaporized in the generation of steam. At the same time that the liquid layer is vaporized, it is resupplied with water from the vapor droplet mixture existing in the upper annular flow regime of the fuel bundle.

With ferrule spacers, the liquid film on the fuel rods downstream of the spacers in the annular flow region is thicker than with other spacer types. This effect results in the ability to support higher fuel rod power levels without "dryout" occurrences. When dryout occurs, the liquid film covering the cladding of the heat generating fuel rods is ruptured and is exposed only to the passing vapor droplet mixture. This dryout causes a temperature increase on the fuel rod cladding with the possibility that the cladding could eventually be damaged or ruptured. To avoid even the remotest possibility of this phenomenon occurring, fuel bundles are limited in their heat generating operation to power levels well below those power levels where such dryout can possibly occur.

In this upper annular flow region of the nuclear reactor, it now known that ferrule spacers have a tendency to support higher fuel rod power levels before dryout occurs. Specifically, the ferrule spacers have the tendency to thicken the downstream liquid film coating in annular flow regime in the upper part of the bundle. This thickening of the film coating allows normal operation of fuel bundles incorporating ferrule spacers at power generation rates exceeding those fuel bundles having different type spacers. As a consequence, such ferrule spacers are being utilized with increasing frequency since they provide additional operating margin before the dryout condition occurs.

Fuel bundles are tested in steam generation loops which simulate the power generation conditions of boiling water nuclear reactors. In such loops, water is circulated through an exact geometry of a simulated fuel bundle. Electric current flowing through the simulated fuel rods, generates the surface heat flux normally existing in the nuclear fuel. In such electrically heated test bundles, it is possible to generate safely power rates that might destroy nuclear fuel rods. By utilizing such tests, the power output conditions that could threaten the integrity of fuel rods loaded with nuclear fuel are determined. Thereafter, and when fuel rods with nuclear fuel within them are operated, they are operated with sufficient safety "margin" so that the power generation rates that would lead to fuel rod cladding destruction are avoided.

Basically the ferrule spacer was designed to improve critical power performance in the annular flow regime present at the top of BWR fuel bundles with no regard to their performance in the nucleate and sub-cooled volume boiling regions at the bottom of the fuel bundle. Particularly, it has been discovered during ferrule spacer critical power tests with highly inlet peaked axial flux shapes that at certain bundle conditions -- specifically, high mass flux and high inlet sub-cooling, departure from nuclear boiling failures (a condition which normally effects PWR's) were experienced on some of the high power simulated fuel rods. These failures occurred immediately downstream of the lowest spacer. Departure from nucleate boiling occurred either at the lowest ferrule spacer or within five to six inches above the lowest ferrule spacer. It is believed that the spacer ferrules surrounding the fuel rods act as an obstacle reducing the velocity of water flowing immediately adjacent to the fuel rod.

Departure from nucleate boiling is a particularly serious phenomenon. Specifically, when this condition occurs, steam accumulates on the surface of the fuel rod so rapidly that the surrounding water flow is unable to sweep or move the generated steam away. The cladding of the fuel rod locally is shrouded in a "vapor blanket." As a result, the cladding of the fuel rod can become rapidly overheated resulting in almost immediate damage to the cladding.

Naturally, the occurrence of such a phenomenon either in a test loop or in a nuclear fuel bundle must be avoided.

Once the performance parameters of ferrule spacers are understood, it can be seen that if a ferrule spacer construction of the first spacer could be altered to raise the power output limit where the departure from nucleate boiling occurs, such a design would be desirable.

The reader will understand that the discovery of a problem to be solved can be a part of invention. Accordingly, in so far as the discovery of the departure from nucleate boiling tendency of the first ferrule spacer of a boiling water nuclear reactor fuel bundle is novel, invention is claimed.

### SUMMARY OF THE INVENTION

In a nuclear fuel bundle for a boiling water nuclear reactor having ferrule spacers, the ferrule spacer closest to the lower tie plate is provided with apertures as large as possible consistent with structural requirements. These large apertures constitute the removal of almost all of the material of the ferrule spacer from around the fuel rods. In this lowest ferrule spacer location, it has been found that these apertures within the individual ferrules suppress the tendency of the fuel rods downstream of the first spacer to be subject to departure from nucleate boiling.

### BRIEF DESCRIPTION OF THE DRAWINGS

Other objects, features and advantages of this invention can be understood with reference to the following specification and attached drawings in which:
Fig. 1 is a perspective view of a nuclear fuel bundle which can incorporate the ferrule spacer of this invention at the bottom spacer;
Fig. 2A is a perspective view of a ferrule spacer of the prior art;
Fig. 2B is a perspective view of two ferrules utilized in the ferrule spacer of Fig. 2A;
Fig. 3A is a side elevation view of a ferrule according this invention illustrating typical large apertures defined in the ferrule sides for placement in the bottom ferrule spacer location illustrated in Fig. 1;
Fig. 3B is a plan view of the spacer configuration of Fig. 3A; and,
Fig. 3C is a perspective view of two ferrules according to this invention being placed around two respective fuel rods illustrating typical large formed "windows" for the suppression of the departure from nucleate boiling (DNB).

### DESCRIPTION OF THE PREFERRED EMBODIMENT

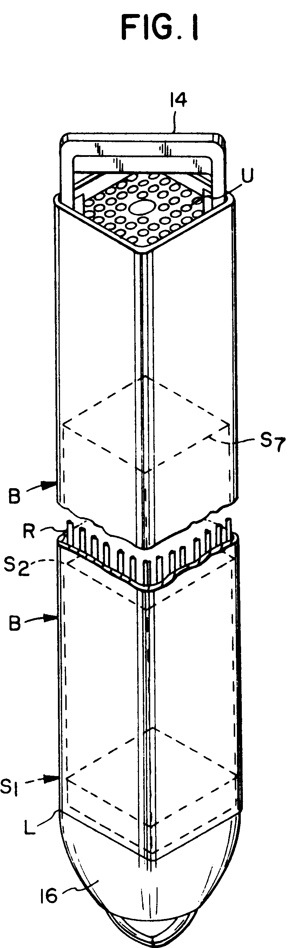

Referring to Fig. 1, a perspective view of a fuel bundle B is illustrated, the view showing the top of the fuel bundle with the middle section missing and emphasizing the lower portion of the fuel bundle. In the disclosed fuel bundle, a 10 by 10 matrix of fuel rods R and held in vertical upstanding relationship between lower tie plate L and upper tie plate U. A bail 14 is used for raising and lowering of the fuel bundle B with a lower tapered end piece 16 for fitting to the reactor (not shown).

Examining the lower portion of bundle B, the location of a lower spacer S₁ is shown. Lower spacer S₁ is the only spacer modified in what would otherwise be a normal ferrule spacer array.

As has previously been described, typically a fuel bundle B includes seven spacers S₁ - S₇. Typically, these respective spacers S₁ - S₇ are distributed from the bottom to the top of the fuel bundle B. In the example given here, the spacers are numbered in the direction of fluid flow; spacer S₁ is at the bottom with spacer S₇ at the top.

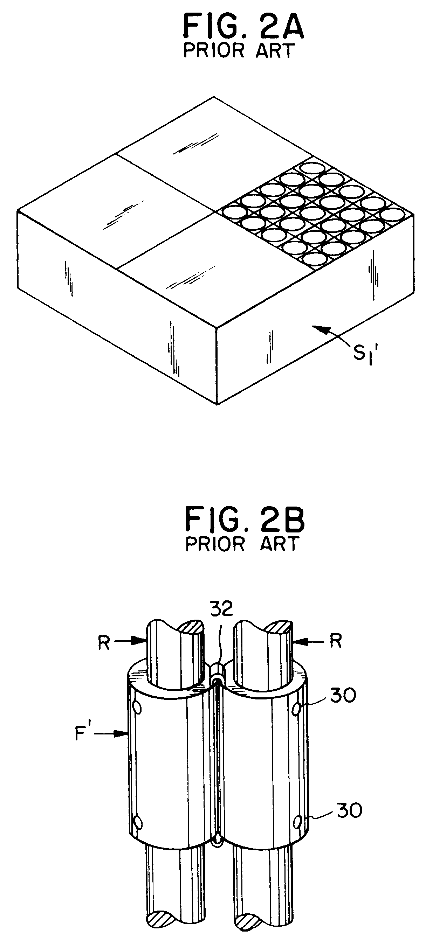

Referring to Fig. 2A and 2B, the construction of a normal ferrule spacers is shown. Typically, such ferrule spacers each surround a fuel rod R (See Fig. 2B). Typically, each spacer defines so-called solid stops 30 against which fuel rods R are biased by an inserted Inconel leaf spring 32. As is well known, the combination of the stops 30 and spring 32 serves to center fuel rods R within conventional ferrules F'. As is shown by Fig. 2A, when spring 32 biases fuel rod R against stops 32, centering of rod R occurs with respect to ferrule F'.

Typically, ferrules F' are manufactured of Zircalloy, a zirconium alloy. This metal has a low neutron cross-section and therefore does not absorb neutrons as fast as other materials which could be used in the manufacture of such spacers.

Heretofore, in all known applications of ferrule spacers, the same ferrule construction has been used from the bottom of the fuel bundle B at spacer S₁ to the top of the fuel bundle B as spacer S₇. As we note here, we have discovered that the presence of a complete ferrule F' in the position of spacer S₁ can lead to the departure from nucleate boiling (DNB) under certain BWR potential operating conditions. This in turn can lead to a rapid clad overheating. Specifically, even though the surrounding liquid is predominantly liquid phase, a vapor blanket can form locally over the outside surface of the fuel rod R thermally insulating it from the coolant. Destruction of the cladding can occur within milliseconds.

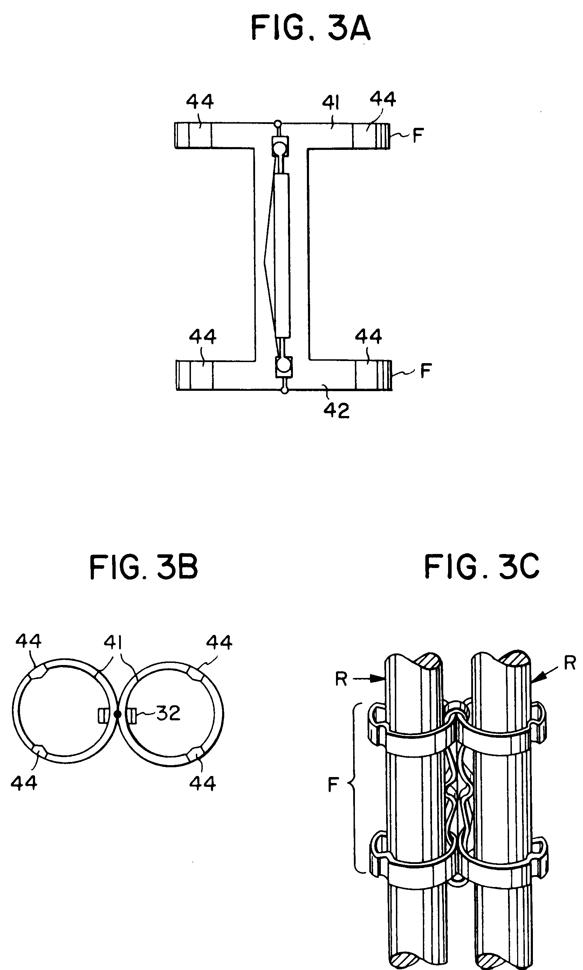

The invention is set forth in Fig. 3A - 3C. Specifically, and preferably utilizing the same Zircalloy as utilized in the prior art, as much of the surface of the spacer ferrule is removed as is consistent with ferrule structural requirements. This leaves an upper ring 41 in each spacer and a lower ring 42 in each spacer.

It is noted that the resulting spacer construction looks not unlike certain Inconel spacers. These spacers may also be utilized in the lower spacer position of spacer S₁. It should be understood, that to applicant's knowledge, a BWR fuel bundle B having spacers S₂ - S₇ being normal ferrule spacers (constructed of Zircalloy) and spacer S₁ being an Inconel spacer is not known. This construction would mitigate the thermal problem of departure from nucleate boiling but would not be as desirable from the nuclear standpoint because of the tendency of Inconel to have a greater neutron absorption cross-section.

## Claims

1. In a nuclear fuel bundle for placement into a fuel bundle channel, said nuclear fuel bundle having in combination:
a plurality of parallel vertically upstanding fuel rods;
a lower tie plate for supporting said rods and permitting the inflow of moderating water coolant;
an upper tie plate for joining at least some of said fuel rods;
an plurality of ferrule spacers positioned between said upper and lower tie plates, said ferrule spacers each including a discrete ferrule around each said fuel rod at each said spacer, each said ferrule further defining at least one stop to permit a fuel rod interior of said ferrule to be biased into contact with said stop to maintain said fuel rod in spaced apart relation with respect to said ferrule; and,
a spring interior of said ferrule for biasing said fuel rod at said ferrule into said stops whereby said fuel rod is maintained in spatial separation with respect to the sides of said ferrule;
the improvement to the bottom ferrule spacer comprising in combination:
said bottom ferrule spacer having discrete ferrules at each fuel rod defining large apertures in the side wall thereof to enhance fluid flow to the surface of said fuel rods immediately downstream of said ferrules.
